# EUROPEAN PATENT APPLICATION

(11) **EP 1 988 129 A2**
(43) Date of publication of application: **05.11.2008**
(21) Application number: 08251510.7
(22) Date of filing: 24.04.2008
(51) Int. Cl.: C09C 1/30

(54) **Hydrophobic spherical silica microparticles having a high degree of flowability, method of producing same, electrostatic image developing toner external additive using same, and organic resin compositon containing same**

(30) Priority: 25.04.2007 JP 2007116094
(71) Applicant: Shin-Etsu Chemical Co., Ltd., Tokyo 100-0005 (JP)
(72) Inventor: Kudo, Muneo c/o Silicone Denshi Zairyo, Annaka-shi, Gunma-ken (JP)
(74) Representative: Hallybone, Huw George

(57) **Abstract**

Hydrophobic spherical silica microparticles are provided. The microparticles are obtained by subjecting hydrophilic spherical silica microparticles obtained by subjecting a tetrafunctional silane compound and/or a partial hydrolysis-condensation product thereof to hydrolysis and condensation, to a two stage hydrophobic treatment introducing R¹Si0_{3/2} units wherein R¹ is a monovalent hydrocarbon group and then introducing R²₃Si0_{1/2} units wherein R² represents monovalent hydrocarbon groups. The hydrophobic spherical silica microparticles have basic flowability energy of not more than 500 mJ, and a particle size within a range from 0.005 to 0.09 µm. The silica microparticles have excellent flowability and dispersibility, and minimal aggregability, and are useful as a toner external additive.

## Description

### BACKGROUND OF THE INVENTION

### 1. Field of the Invention

The present invention relates to hydrophobic spherical silica microparticles having a high degree of flowability, and relates particularly to hydrophobic spherical silica microparticles having a small particle size, excellent flowability and dispersibility, and minimal aggregability.

Moreover, the invention also relates to an external additive for a fine particle size toner that is used for improving image quality, wherein the additive improves the caking resistance of the toner, imparts the toner with a high degree of chargeability and a chargeability that is independent of the environment, and improves the flowability of the toner. The invention also relates to an organic resin composition that comprises the spherical silica microparticles.

### 2. Description of the Prior Art

The dry developers used in electrophotographic methods can be broadly classified into one-component developers, which simply use a toner comprising a colorant dispersed within a binder resin, and two-component developers in which a carrier is mixed with the toner. When a copying operation is conducted using one of these developers, in order to ensure favorable process compatibility, the developer must exhibit superior flowability, caking resistance, fixability, chargeability and cleaning properties and the like. Inorganic microparticles are frequently added to the toner, particularly to improve the flowability, caking resistance, fixability and cleaning properties. However, the dispersibility of these inorganic microparticles has a significant effect on the toner properties, and if the dispersion of the microparticles is uneven, then a variety of problems may arise, including an inability to obtain the desired levels of flowability, caking resistance and fixability, and inadequate cleaning properties resulting in bonding of the toner to the photoreceptor and the appearance of image defects such as black spots. In order to alleviate these problems, various inorganic microparticles having hydrophobically treated surfaces have been proposed, including particularly large numbers of silica microparticles in which the surface has undergone a hydrophobic treatment.

The synthetic silica microparticles that function as the raw material for such silica materials can be broadly classified, on the basis of the production method, into combustion method silica (so-called fumed silica) obtained by combusting a silane compound, deflagration method silica obtained by explosive combustion of metallic silicon powder, wet silica obtained by a neutralization reaction between sodium silicate and a mineral acid (of these, silica that is synthesized and aggregated under alkali conditions is referred to as precipitated silica, whereas silica that is synthesized and aggregated under acidic conditions is referred to as gel method silica), colloidal silica (or silica sol) obtained by preparing an acidic hydrated silica by using an ion exchange resin to remove the sodium from sodium silicate, and then converting the hydrated silica to an alkaline form and conducting a polymerization, and sol-gel method silica obtained by hydrolysis of a hydrocarbyloxysilane (the so-called Stoeber method).

Examples of hydrophobic treatment methods include methods in which a hydrophobizing agent such as a surfactant, silicone oil, or a vapor of a silylation agent such as an alkylhalogenosilane, alkylalkoxysilane or alkyldisilazane is brought into contact with a silica microparticles powder, and methods in which a silylation agent is brought into contact with a silica microparticles powder within a mixed solvent of water and a hydrophilic organic solvent.

Hydrophobic treatments that use precipitated silica or fumed silica as the silica raw material are already known, as described below.

A method of generating a hydrophobic precipitated silica by bringing an aqueous suspension of a hydrophilic precipitated silica into contact with a catalytic quantity of an acid and an organosilane compound, in the presence of a mixture of water and a miscible organic solvent that is provided in sufficient quantity to accelerate the reaction between the organosilicon compound and the hydrophilic precipitated silica (see patent reference 1).

A method of surface treating a fumed silica of average primary particle size of 5 to 50 nm with hexamethyldisilazane, thereby forming silicon oxide particles in which at least 40% of the silanol groups at the particle surfaces are blocked, and in which the concentration of residual silanol groups is not more than 1.5 groups/nm² (see patent reference 2).

A method of subjecting a fumed silica to a hydrophobic treatment with an organosilicon compound such as hexamethyldisilazane, thereby forming a hydrophobic fumed silica having a bulk density of 80 to 300 g/l, a quantity of OH groups per unit surface area of not more than 0.5 groups/nm², and containing not more than 2,000 ppm of aggregate particles with a particle size of 45 µm or greater (see patent reference 3).

A method of generating a hydrophobic silica powder by treating a fumed silica with a polysiloxane and then with a trimethylsilylation agent (see patent reference 4).

A method of obtaining a highly dispersible hydrophobic silica powder by subjecting a fumed silica to a primary surface treatment using a silicone oil-based treatment agent, crushing the silica following the primary surface treatment, and then conducting a secondary surface treatment using an alkylsilazane-based treatment agent (see patent reference 5).

However, in all of these hydrophobic treatment methods that employ a precipitated silica or fumed silica, no disclosure is made regarding the relationship between the primary particle size of the silica raw material and the aggregate particle size following the hydrophobic treatment. Furthermore, because the silica raw material itself is aggregated, obtaining a hydrophobic silica powder having superior flowability and dispersibility is impossible.

On the other hand, methods of conducting a hydrophobic treatment using a highly dispersible silica sol as the starting silica raw material are also known. A hydrophobic silica powder can be obtained by dispersing a silica sol in either an organic solvent such as an alcohol or water, reacting the dispersion with a silylation agent such as an alkylhalogenosilane, alkylalkoxysilane or alkyldisilazane, and then removing the organic solvent or the water. Specific examples include the techniques outlined below.

A method of adding a silylation agent to a butanol-dispersed silica sol with a moisture content of 10% or less, and following reaction, removing the solvent by evaporation, thereby forming a silica powder that is re-dispersible in an organic solvent and comprises silyl groups of 1 to 36 carbon atoms bonded to the surface of colloidal silica particles in a quantity within a range from 1 to 100 groups/10 nm² (see patent reference 6).

A method of obtaining a hydrophobic non-aggregated colloidal silica by subjecting a hydrophilic colloidal silica with an average particle size greater than 4 nm to a hydrophobic treatment by addition to a mixed solvent containing concentrated hydrochloric acid, isopropanol and hexamethyldisiloxane, subsequently extracting the hydrophobic colloidal silica into a hydrophobic organic solvent and conducting refluxing under heat, and then adding a silane compound and refluxing under heat to effect a further hydrophilic treatment (see patent reference 7).

A method of obtaining a hydrophobic silica powder by adding a disilazane compound to an aqueous silica sol comprising a hydrophilic colloidal silica, aging the mixture by heating at a temperature within a range from 50 to 100°C, thereby forming a slurry-like dispersion of a hydrophobically treated colloidal silica, and then drying the dispersion (see patent reference 8).

However, in all of these hydrophobic treatment methods that employ a silica sol, aggregation occurs when the product is obtained as a powder, meaning the particle size of the hydrophobically treated silica is unable to retain the primary particle size of the silica raw material, and therefore making it impossible to obtain a hydrophobic silica powder having superior flowability and dispersibility. The colloidal silica obtained in the patent reference 7 has been examined for aggregation by observation with a transmission electron microscope. The samples used for these observations are typically prepared by drying the silica under extremely dilute conditions that do not produce aggregation, meaning that although the presence or absence of aggregation can be determined for a dispersion of the silica in toluene, a determination cannot be made as to whether the high-concentration silica powder obtained via an industrial drying process suffers from aggregation. Accordingly, although this colloidal silica is known to retain its primary particle size within a toluene dispersion, it is thought that when extracted as a powder, it is likely to undergo aggregation in a similar manner to the silica described in the patent reference 8.

In recent years, due to the use of organic photoreceptors in order to generate higher quality images, and the use of finer sized toners, the performance of the above silica particle powders as toner external additives has become inadequate. Furthermore, the surface of an organic photoreceptor tends to be softer and more reactive than the surface of an inorganic photoreceptor, meaning it tends to be prone to a shortened lifespan. Accordingly, when this type of organic photoreceptor is used, the photoreceptor is prone to degradation and abrasion caused by the inorganic microparticles added to the toner. Moreover, in those cases where the particle size of the toner is reduced, because the powder flowability is inferior to that of a toner of typical particle size, a larger quantity of the inorganic microparticles must be added, and as a result, the inorganic microparticles cause an increase in toner adhesion to the photoreceptor.

Methods of conducting a hydrophobic treatment using a highly dispersible sol-gel method silica as the starting silica raw material are also known. A hydrophobic silica powder can be obtained by dispersing a sol-gel method silica in an organic solvent such as an alcohol or water, reacting the dispersion with a silylation agent such as an alkylhalogenosilane, alkylalkoxysilane or alkyldisilazane, and then removing the organic solvent or the water. Specific examples include the techniques outlined below.

A method of obtaining hydrophobic spherical silica microparticles by hydrolyzing tetramethoxysilane in methanol and in the presence of ammonia water to form a methanol dispersion of spherical silica particles, adding either methoxytrimethylsilane or hexamethyldisilazane to the dispersion, recovering any excess silylation agent, and then drying the dispersion (see patent reference 9 and patent reference 10).

A method of obtaining surface-treated spherical silica microparticles by hydrolyzing a tetraalkoxysilane compound in the presence of a basic substance to prepared hydrophilic spherical silica microparticles, removing the alcohol, subsequently hydrophobically treating the spherical silica microparticles with an alkyltrialkoxysilane compound, replacing the solvent with a ketone-based solvent, subjecting residual reactive groups on the surface of the spherical silica microparticles to a triorganosilylation using a silazane compound or a trialkylalkoxysilane compound, and finally removing the solvent by evaporation under reduced pressure is also known (see patent reference 11 and patent reference 12).

However, in all of these hydrophobic treatment methods that employ a sol-gel method silica, aggregation occurs when the product is obtained as a powder, meaning the particle size of the hydrophobically treated silica is unable to retain the primary particle size of the silica raw material. Only a single example is reported of a non-aggregated product (patent reference 12, example 4), and in those cases where the particle size is less than 90 nm, carrying out the methods described in the examples (patent reference 12, examples 1, 2 and 7) is unable to produce a silica having the particle size of the silica starting material reported in the examples. Accordingly, obtaining hydrophobic spherical silica microparticles having a small particle size and superior flowability and dispersibility has proven impossible.

The performance of the above spherical silica microparticle powders as toner external additives is inadequate in terms of the resulting dispersibility and flowability, meaning they are unable to impart the required flowability and caking resistance properties to the toner. Furthermore, because the silica raw material is a sol-gel method silica, the charge quantity tends to be low, meaning a satisfactory charge cannot be applied to the toner.

Another use that has been proposed for hydrophobic spherical silica microparticles involves the addition of the spherical silica microparticles to organic resins, and particularly to organic resin films, in order to improve the transparency, blocking resistance and slip properties of the resulting films (see patent reference 12).

However, with the spherical silica microparticles described above, because the particle size is large and the dispersibility is inadequate, the resulting levels of transparency, blocking resistance and slip are not entirely satisfactory.
[Patent Reference 1] EP 1048696 A2
[Patent Reference 2] JP 07-286095 A
[Patent Reference 3] JP 2000-256008 A
[Patent Reference 4] JP 2002-256170 A
[Patent Reference 5] JP 2004-168559 A
[Patent Reference 6] JP 58-145614 A
[Patent Reference 7] EP 0982268 A1
[Patent Reference 8] US 2006/0112860 A1
[Patent Reference 9] JP 03-187913 A
[Patent Reference 10] JP 2001-194824 A
[Patent Reference 11] US 6,316,15 B1
[Patent Reference 12] US 6,521,290 B1

### SUMMARY OF THE INVENTION

An object of the present invention is to provide a toner external additive formed from hydrophobic spherical silica microparticles having a small particle size, excellent flowability and dispersibility, and minimal aggregability, which is capable of imparting a toner with the required levels of flowability and caking resistance, as well as a satisfactory charge quantity.

Furthermore, another object of the present invention is to provide an organic resin composition containing silica microparticles with superior dispersibility and stability over time, thereby enabling the production of a film having excellent transparency, blocking resistance and slip properties.

Yet another object of the present invention is to provide hydrophobic spherical silica microparticles that are useful in the production of the above toner external additive and production of the above organic resin composition, as well as a method of producing the hydrophobic spherical silica microparticles.

In order to achieve the above objects, a first aspect of the present invention provides hydrophobic spherical silica microparticles,
obtained by subjecting the surface of hydrophilic spherical silica microparticles, composed essentially of SiO₂ units and obtained by subjecting a tetrafunctional silane compound, a partial hydrolysis-condensation product thereof or a combination of the two to hydrolysis and condensation, to a hydrophobic treatment comprising a step of introducing R¹SiO_{3/2} units (wherein, R¹ represents a substituted or unsubstituted monovalent hydrocarbon group of 1 to 20 carbon atoms) and then a step of introducing R²₃SiO_{1/2} units (wherein, R² represents identical or different, substituted or unsubstituted monovalent hydrocarbon groups of 1 to 6 carbon atoms), and having
a basic flowability energy of not more than 500 mJ, and
a particle size within a range from 0.005 to 0.09 µm.

A second aspect of the present invention provides a method of producing the hydrophobic spherical silica microparticles defined in the first aspect, the method comprising:
(A1) subjecting a tetrafunctional silane compound represented by a general formula (I):

   Si(OR³)₄ (I)

   (wherein, R³ represents identical or different monovalent hydrocarbon groups of 1 to 6 carbon atoms), a partial hydrolysis-condensation product thereof or a combination of the two to hydrolysis and condensation, in the presence of a basic substance and within a mixed liquid of a hydrophilic organic solvent and water, thereby yielding a mixed solvent dispersion of hydrophilic spherical silica microparticles composed essentially of SiO₂ units,
(A2) adding a trifunctional silane compound represented by a general formula (II) shown below:

   R¹Si(OR⁴)₃ (II)

   (wherein, R¹ represents a substituted or unsubstituted monovalent hydrocarbon group of 1 to 20 carbon atoms, and R⁴ represents identical or different monovalent hydrocarbon groups of 1 to 6 carbon atoms), a partial hydrolysis-condensation product thereof or a combination of the two to the mixed solvent dispersion of hydrophilic spherical silica microparticles, thereby treating the surface of the hydrophilic spherical silica microparticles, introducing R¹SiO_{3/2} units (wherein, R¹ is as defined above) at the surface of the hydrophilic spherical silica microparticles, and yielding a first hydrophobic spherical silica microparticles mixed solvent dispersion,
(A3) removing a portion of the hydrophilic organic solvent and water from the first hydrophobic spherical silica microparticles mixed solvent dispersion, thereby concentrating the dispersion and forming a first hydrophobic spherical silica microparticles mixed solvent concentrated dispersion, and
(A4) adding a silazane compound represented by a general formula (III) shown below:

   R²₃SiNHSiR²₃ (III)

   (wherein, R² represents identical or different, substituted or unsubstituted monovalent hydrocarbon groups of 1 to 6 carbon atoms), a monofunctional silane compound represented by a general formula (IV) shown below:

   R²₃SiX (IV)

   (wherein, R² is as defined above for the general formula (III), and X represents an OH group or a hydrolyzable group) or a mixture of the two the first hydrophobic spherical silica microparticles mixed solvent concentrated dispersion, thereby treating the surface of the first hydrophobic spherical silica microparticles, introducing R²₃SiO_{1/2} units (wherein, R² is as defined above for the general formula (III)) at the surface of the first hydrophobic spherical silica microparticles, and yielding second hydrophobic spherical silica microparticles.
   A third aspect of the present invention provides a method of producing the hydrophobic spherical silica microparticles defined in the first aspect, the method comprising:
(B1) subjecting a tetrafunctional silane compound represented by a general formula (I):

   Si(OR³)₄ (I)

   (wherein, R³ represents identical or different monovalent hydrocarbon groups of 1 to 6 carbon atoms), a partial hydrolysis-condensation product thereof or a combination of the two to hydrolysis and condensation within a mixed liquid of a hydrophilic organic solvent and water that contains a basic substance, thereby yielding a mixed solvent dispersion of hydrophilic spherical silica microparticles composed essentially of SiO₂ units,
(B2) adding a trifunctional silane compound represented by a general formula (II) shown below:

   R¹Si(OR⁴)₃ (II)

   (wherein, R¹ represents a substituted or unsubstituted monovalent hydrocarbon group of 1 to 20 carbon atoms, and R⁴ represents identical or different monovalent hydrocarbon groups of 1 to 6 carbon atoms), a partial hydrolysis-condensation product thereof or a combination of the two to the mixed solvent dispersion of hydrophilic spherical silica microparticles, thereby treating the surface of the hydrophilic spherical silica microparticles, introducing R¹SiO_{3/2} units (wherein, R¹ is as defined above) at the surface of the hydrophilic spherical silica microparticles, and yielding a first hydrophobic spherical silica microparticles mixed solvent dispersion,
(B3) adding a silazane compound represented by a general formula (III) shown below:

   R²₃SiNHSiR²₃ (III)

   (wherein, R² represents identical or different, substituted or unsubstituted monovalent hydrocarbon groups of 1 to 6 carbon atoms), a monofunctional silane compound represented by a general formula (IV) shown below:

   R²₃SiX (IV)

   (wherein, R² is as defined above for the general formula (III), and X represents an OH group or a hydrolyzable group) or a combination of the two to the first hydrophobic spherical silica microparticles mixed solvent dispersion, thereby treating the surface of the first hydrophobic spherical silica microparticles, introducing R²₃SiO_{1/2} units (wherein, R² is as defined above for the general formula (III)) at the surface of the hydrophobic spherical silica microparticles, and yielding a second hydrophobic spherical silica microparticles mixed solvent dispersion,
(B4) converting the dispersion medium of the second hydrophobic spherical silica microparticles mixed solvent dispersion to a hydrocarbon-based solvent, thereby forming a second hydrophobic spherical silica microparticles hydrocarbon-based solvent dispersion, and
(B5) adding a silazane compound represented by the general formula (III), a monofunctional silane compound represented by the general formula (IV) or a combination of the two to the second hydrophobic spherical silica microparticles hydrocarbon-based solvent dispersion, thereby further treating the surface of the second hydrophobic spherical silica microparticles, introducing additional R²₃SiO_{1/2} units (wherein, R² is as defined above for the general formula (III)) at the surface of the hydrophobic spherical silica microparticles, and yielding third hydrophobic spherical silica microparticles.

Furthermore, a fourth aspect of the present invention provides an electrostatic image developing toner external additive formed from the above hydrophobic spherical silica microparticles.

Moreover, a fifth aspect of the present invention provides an organic resin composition, comprising:
(a) 100 parts by mass of an organic resin, and
(b) 0.01 to 20 parts by mass of the hydrophobic spherical silica microparticles defined in the first aspect.
   Hydrophobic silica microparticles obtained using the present invention have a small particle size, and yet exhibit higher levels of flowability and dispersibility and a lower level of aggregability than conventional particles.

If the hydrophobic spherical silica microparticles of the present invention are used as a toner external additive, then the caking resistance of the toner can be improved, the toner can be imparted with a high degree of chargeability and a chargeability that is independent of the environment, and the flowability of the toner can also be improved. Furthermore, the hydrophobic spherical silica microparticles of the present invention undergo no reaction or interaction with organic photoreceptors, meaning degradation and abrasion of the photoreceptor is unlikely. Moreover, because the hydrophobic spherical silica microparticles exhibit favorable dispersibility and flowability, toner adhesion to the photoreceptor becomes less likely, meaning a higher quality image can be expected.

The hydrophobic spherical silica microparticles of the present invention can also be used favorably for improving the properties (such as the slip properties, abrasion resistance, lubricity, blocking prevention and flexibility) of various rubbers and synthetic resins, improving the properties of coating materials and ink coating agents, imparting lubricity or water repellency to cosmetic products, and improving the flowability of all manner of powders such as the abrasive particles of an abrasive or powdered resins.

In particular, in an organic resin composition of the present invention, because the aforementioned silica microparticles with high levels of flowability and dispersibility and low aggregability are used as a component material of the composition, precipitation of the silica microparticles over time is unlikely, meaning a film with favorable transparency, and excellent blocking resistance, slip, and scratch resistance properties can be obtained.

### DETAILED DESCRIPTION OF THE PREFERRED EMBODIMENTS

A more detailed description of the present invention is provided below.

### <Features of the Hydrophobic Spherical Silica Microparticles>

First is a detailed description of the special features of the hydrophobic spherical silica microparticles of the present invention.

The microparticles of the present invention are hydrophobic spherical silica microparticles obtained by subjecting the surface of hydrophilic spherical silica microparticles, composed essentially of SiO₂ units and obtained by subjecting a tetrafunctional silane compound, a partial hydrolysis-condensation product thereof or a combination of the two to hydrolysis and condensation, to a hydrophobic treatment comprising a step of introducing R¹SiO_{3/2} units (wherein, R¹ represents a substituted or unsubstituted monovalent hydrocarbon group of 1 to 20 carbon atoms) and then a step of introducing R²₃SiO_{1/2} units (wherein, R² represents identical or different, substituted or unsubstituted monovalent hydrocarbon groups of 1 to 6 carbon atoms), wherein the microparticles have a basic flowability energy of not more than 500 mJ and preferably not more than 400 mJ, and a particle size within a range from 0.005 to 0.09 µm, preferably from 0.01 to 0.07 µm, and even more preferably from 0.04 to 0.06 µm.

In the above description, the expression describing the hydrophilic spherical silica microparticles as being "composed essentially of SiO₂ units" means that although the microparticles are composed basically of SiO₂ units, they are not composed entirely of such units, and as is widely known, large quantities of silanol groups exist at least at the particle surface. Furthermore, the above expression also means that, in some cases, a small quantity of hydrolyzable groups (hydrocarbyloxy groups) derived from the tetrafunctional silane compound, partial hydrolysis-condensation product thereof or a mixture of the two that functions as the raw material may also remain, without undergoing conversion to silanol groups, either at the microparticle surface or within the particle interior.

The basic flowability energy of the hydrophobic spherical silica microparticles of the present invention must be not more than 500 mJ, and is preferably not more than 400 mJ. If this basic flowability energy exceeds 500 mJ, then the flowability of the microparticles becomes inadequate, which can cause a variety of problems, including unsatisfactory flowability, caking resistance and fixability for a toner containing the microparticles as an external additive, as well as a charge quantity for the toner that is unable to be raised sufficiently.

In the present invention the basic flowability energy of the hydrophobic spherical silica microparticles refers to a value measured using a powder flowability analyzer FT-4, a glass circular cylindrical container with a capacity of 160 ml, and a blade of diameter 48 mm (manufactured by Sysmex Corporation), as described below. Smaller values for this basic flowability energy indicate more favorable flowability for the powder, and therefore the basic flowability energy is used an indicator of the flowability of a powder.

If the particle size is less than 0.005 µm, then the microparticles tend to aggregate when obtained in powder form, meaning the flowability, caking resistance and fixability for a toner containing the microparticles tend to be unsatisfactory, whereas if the particle size exceeds 0.09 µm, then the charge quantity for the toner cannot be increased adequately, and other problems can also arise, including degradation or abrasion of the photoreceptor, and a deterioration in the adhesion of the microparticles to the toner. In this description, the "particle size" refers to the volume-based median size.

In those cases where the microparticles are added to an organic resin to prepare the composition described above, if the basic flowability energy exceeds 500 mJ, then the flowability of the powder becomes inadequate, uniform blending of the microparticles into the organic resin becomes difficult, and aggregates (lumps) tend to form within the organic resin, resulting in unsatisfactory transparency, blocking resistance and slip properties. If the particle size is less than 0.005 µm, then the microparticles tend to aggregate when obtained in powder form, generating aggregates within the organic resin that result in unsatisfactory transparency, blocking resistance and slip properties, whereas if the particle size exceeds 0.09 µm, then the transparency and blocking resistance of the organic resin become unsatisfactory.

In the hydrophobic spherical silica microparticles of the present invention, the description "spherical" includes not only perfect spheres, but also slightly misshapen spherical shapes. The shape of this type of misshapen particle is evaluated on the basis of the degree of circularity when the shape of the particle is projected onto a two dimensional space, and refers to particles with a degree of circularity of 0.8 to 1. The degree of circularity is calculated from the formula (circumferential length of a circle with the same surface area as the particle) / (circumferential length of the particle). This degree of circularity can be measured by image analysis of a particle image obtained using an electron microscope or the like.

As described above, the present invention uses a small particle size sol-gel method silica obtained by hydrolysis of a tetraalkoxysilane as the silica raw material, and by subjecting this silica raw material to a specific surface treatment, yields a hydrophobically treated silica powder which, when obtained in powder form, has a particle size that retains the primary particle size of the silica raw material without undergoing aggregation, and therefore has a small particle size as well as excellent flowability and dispersibility.

The small particle size silica raw material can be produced with any desirable particle size by altering a variety of conditions, for example, by using a tetraalkoxysilane in which the alkoxy groups contain a small number of carbon atoms, using an alcohol with a small number of carbon atoms as the solvent, raising the hydrolysis temperature, lowering the concentration during the hydrolysis of the tetraalkoxysilane, and lowering the concentration of the hydrolysis catalyst.

By subjecting this small particle size silica raw material to the specific surface treatment described below, the desired hydrophobic silica powder can be obtained. In the present invention, two methods are proposed for conducting the surface treatment.

Next is a detailed description of one of the methods of producing the hydrophobic spherical silica microparticles of the present invention.

### <Production Method A>

According to this method, the hydrophobic spherical silica microparticles of the present invention are obtained via:
Step (A1): a step of synthesizing hydrophilic spherical silica microparticles,
Step (A2): a surface treatment step using a trifunctional silane compound,
Step (A3): a concentration step, and
Step (A4): a surface treatment step using a monofunctional silane compound.

Each of these steps is described below in sequence.
- Step (A1): Step of Synthesizing Hydrophilic Spherical Silica Microparticles
   A tetrafunctional silane compound represented by a general formula (I):

   Si(OR³)₄ (I)

   (wherein, R³ represents identical or different monovalent hydrocarbon groups of 1 to 6 carbon atoms), a partial hydrolysis-condensation product thereof or a combination of the two is subjected to hydrolysis and condensation, within a mixed liquid of a hydrophilic organic solvent and water that contains a basic substance, thereby yielding a mixed solvent dispersion of hydrophilic spherical silica microparticles.
   In the general formula (I), R³ is preferably a monovalent hydrocarbon group of 1 to 4 carbon atoms, and even more preferably a monovalent hydrocarbon of 1 to 2 carbon atoms. Examples of the monovalent hydrocarbon group represented by R³ include a methyl group, ethyl group, propyl group, butyl group and phenyl group, preferred examples include a methyl group, ethyl group, propyl group and butyl group, and particularly preferred examples include a methyl group and ethyl group.
   Examples of the tetrafunctional silane compound represented by the general formula (I) include tetraalkoxysilanes such as tetramethoxysilane, tetraethoxysilane, tetrapropoxysilane and tetrabutoxysilane, as well as tetraphenoxysilane, preferred examples include tetramethoxysilane, tetraethoxysilane, tetrapropoxysilane and tetrabutoxysilane, and particularly preferred examples include tetramethoxysilane and tetraethoxysilane. Furthermore, examples of partial hydrolysis-condensation products of tetrafunctional silane compounds represented by the general formula (I) include methyl silicate and ethyl silicate.
   There are no particular restrictions on the hydrophilic organic solvent, provided it is capable of dissolving the tetrafunctional silane compound represented by the general formula (I), partial hydrolysis-condensation products thereof, and water, and examples include alcohols, cellosolves such as methyl cellosolve, ethyl cellosolve, butyl cellosolve and cellosolve acetate, ketones such as acetone and methyl ethyl ketone, and ethers such as dioxane and tetrahydrofuran, and of these, alcohols and cellosolves are preferred, and alcohols are particularly desirable. These alcohols include compounds represented by the general formula (V) shown below:

   R⁵OH (V)

   [wherein, R⁵ represents a monovalent hydrocarbon group of 1 to 6 carbon atoms]
   In the above general formula (V), R⁵ is preferably a monovalent hydrocarbon group of 1 to 4 carbon atoms, and even more preferably a monovalent hydrocarbon group of 1 to 2 carbon atoms. Examples of the monovalent hydrocarbon group represented by R⁵ include alkyl groups such as a methyl group, ethyl group, propyl group, isopropyl group and butyl group, preferred examples include a methyl group, ethyl group, propyl group and isopropyl group, and particularly preferred examples include a methyl group and ethyl group. Examples of the alcohol represented by the general formula (V) include methanol, ethanol, propanol, isopropanol and butanol, and preferred examples include methanol and ethanol. As the number of carbon atoms within the alcohol increases, the particle size of the produced spherical silica microparticles also increases. Accordingly, the alcohol is preferably selected in accordance with the target particle size for the spherical silica microparticles.
   Examples of the above basic substance include ammonia, dimethylamine and diethylamine, and of these, ammonia and diethylamine are preferred, and ammonia is particularly desirable. A predetermined quantity of the basic substance is typically dissolved in water, and the resulting (basic) aqueous solution is then mixed with the above hydrophilic organic solvent.
   The quantity of water used at this point is preferably within a range from 0.5 to 5 mols, even more preferably from 0.6 to 2 mols, and most preferably from 0.7 to 1 mols, per 1 mol of the total quantity of hydrocarbyloxy groups within the tetrafunctional silane compound represented by the general formula (I), the partial hydrolysis-condensation product thereof or a mixture of the two. The ratio of the hydrophilic organic solvent relative to the water, reported as a mass ratio, is preferably within a range from 0.5 to 10, even more preferably from 3 to 9, and is most preferably from 5 to 8. The greater the quantity of the hydrophilic organic solvent, the smaller the particle size of the silica microparticles becomes. The quantity of the basic substance is preferably within a range from 0.01 to 2 mols, even more preferably from 0.02 to 0.5 mols, and most preferably from 0.04 to 0.12 mols, per 1 mol of the total quantity of hydrocarbyloxy groups within the tetrafunctional silane compound represented by the general formula (I), the partial hydrolysis-condensation product thereof or a mixture of the two. The smaller the quantity of the basic substance, the smaller the particle size of the silica microparticles becomes.
   The hydrolysis and condensation of the tetrafunctional silane compound represented by the general formula (I) can be conducted using known methods, namely, by adding the tetrafunctional silane compound represented by the general formula (I) to a mixture of the hydrophilic organic solvent and water containing the basic substance.
   The concentration of the silica microparticles within the mixed solvent dispersion of hydrophilic spherical silica microparticles obtained in this step (A1) is typically within a range from 3 to 15% by mass, and is preferably from 5 to 10% by mass.
- Step (A2): Surface Treatment Step using a Trifunctional Silane Compound
   A trifunctional silane compound represented by a general formula (II) shown below:

   R¹Si(OR⁴)₃ (II)

   (wherein, R¹ represents a substituted or unsubstituted monovalent hydrocarbon group of 1 to 20 carbon atoms, and R⁴ represents identical or different monovalent hydrocarbon groups of 1 to 6 carbon atoms), a partial hydrolysis-condensation product thereof or a combination of the two is added to the mixed solvent dispersion of hydrophilic spherical silica microparticles obtained in the step (A1), thereby treating the surface of the hydrophilic spherical silica microparticles, introducing R¹SiO_{3/2} units (wherein, R¹ is as defined above) at the surface of the hydrophilic spherical silica microparticles, and yielding a first hydrophobic spherical silica microparticles mixed solvent dispersion.
   This step (A2) is essential for inhibiting the aggregation of the silica microparticles in the subsequent concentration step (A3). If such aggregation cannot be inhibited, then the particles within the produced silica-based powder are unable to retain their primary particle size, causing a deterioration in the flowability. Furthermore, this step (A2) is also essential in increasing the toner charge quantity and improving the toner dispersibility.
   In the above general formula (II), R¹ is preferably a monovalent hydrocarbon group of 1 to 3 carbon atoms, and even more preferably a monovalent hydrocarbon group of 1 to 2 carbon atoms. Examples of the monovalent hydrocarbon group represented by R¹ include alkyl groups such as a methyl group, ethyl group, n-propyl group, isopropyl group, butyl group and hexyl group, preferred examples include a methyl group, ethyl group, n-propyl group and isopropyl group, and particularly preferred examples include a methyl group and ethyl group. A portion of, or all of, the hydrogen atoms within these monovalent hydrocarbon groups may be substituted with a halogen atom such as a fluorine atom, chlorine atom or bromine atom, and preferably with a fluorine atom.
   In the general formula (II), R⁴ is preferably a monovalent hydrocarbon group of 1 to 3 carbon atoms, and even more preferably a monovalent hydrocarbon group of 1 to 2 carbon atoms. Examples of the monovalent hydrocarbon group represented by R⁴ include alkyl groups such as a methyl group, ethyl group, propyl group and butyl group, preferred examples include a methyl group, ethyl group and propyl group, and particularly preferred examples include a methyl group and ethyl group.
   Examples of the trifunctional silane compound represented by the general formula (II) include trialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, butyltrimethoxysilane, butyltriethoxysilane, hexyltrimethoxysilane, trifluoropropyltrimethoxysilane, and heptadecafluorodecyltrimethoxysilane, and of these, methyltrimethoxysilane, methyltriethoxysilane, ethyltrimethoxysilane and ethyltriethoxysilane are preferred, and methyltrimethoxysilane and methyltriethoxysilane are particularly desirable. Partial hydrolysis-condensation products of the above compounds may also be used.
   The quantity added of the trifunctional silane compound represented by the general formula (II) is preferably within a range from 0.001 to 1 mol, and preferably from 0.01 to 0.1 mols, and even more preferably from 0.01 to 0.05 mols, per 1 mol of Si atoms within the hydrophilic spherical silica microparticles. If this quantity is less than 0.001 mols, then the desired increases in the charge quantity and the dispersibility are not realized, whereas if the quantity exceeds 1 mol, the silica microparticles tend to aggregate.
   The concentration of the silica microparticles within the first hydrophobic spherical silica microparticles mixed solvent dispersion obtained in this step (A2) is typically at least 3% by mass but less than 15% by mass, and is preferably within a range from 5 to 10% by mass. Under conditions where this concentration is too low, the productivity tends to deteriorate, whereas if the concentration is too high, the silica microparticles tend to aggregate.
- Step (A3): Concentration Step
   A portion of the hydrophilic organic solvent and water is removed from the first hydrophobic spherical silica microparticles mixed solvent dispersion obtained in the step (A2), thereby concentrating the dispersion and forming a first hydrophobic spherical silica microparticles mixed solvent concentrated dispersion. Examples of methods of removing a portion of the hydrophilic organic solvent and water include removal by evaporation and removal by evaporation under reduced pressure. The silica microparticles concentration within the concentrated dispersion is preferably within a range from 15 to 40% by mass, even more preferably from 20 to 35% by mass, and is most preferably from 25 to 30% by mass. If this concentration is less than 15% by mass, then the surface treatment of the subsequent step tends to proceed poorly, whereas if the concentration exceeds 40% by mass, then the silica microparticles tend to aggregate.
   The step (A3) is essential in suppressing the occurrence of a variety of problems in the subsequent step (A4), including reaction of the silazane compound of the general formula (III) and/or monofunctional silane compound of the general formula (IV) that functions as the surface treatment agent with the alcohol and/or water, resulting in an unsatisfactory surface treatment, the occurrence of aggregation during subsequent drying, and an inability of the product silica microparticles to retain the raw material primary particle size, causing a deterioration in the flowability.
- Step (A4): Surface Treatment Step using a Monofunctional Silane Compound
   A silazane compound represented by a general formula (III) shown below:

   R²₃SiNHSiR²₃ (III)

   (wherein, R² represents identical or different, substituted or unsubstituted monovalent hydrocarbon groups of 1 to 6 carbon atoms), a monofunctional silane compound represented by a general formula (IV) shown below:

   R²₃SiX (IV)

   (wherein, R² is as defined above for the general formula (III), and X represents an OH group or a hydrolyzable group) or a mixture of the two is added to the first hydrophobic spherical silica microparticles mixed solvent concentrated dispersion obtained in the step (A3), thereby treating the surface of the first hydrophobic spherical silica microparticles, introducing R²₃SiO_{1/2} units (wherein, R² is as defined above for the general formula (III)) at the surface of the first hydrophobic spherical silica microparticles, and yielding second hydrophobic spherical silica microparticles. In this step, the treatment described above causes residual silanol groups at the surface of the first hydrophobic spherical silica microparticles to undergo a triorganosilylation process, thereby introducing R²₃SiO_{1/2} units at the particle surface.

In the general formulas (III) and (IV), R² is preferably a monovalent hydrocarbon group of 1 to 4 carbon atoms, and even more preferably a monovalent hydrocarbon group of 1 to 2 carbon atoms. Examples of the monovalent hydrocarbon group represented by R² include alkyl groups such as a methyl group, ethyl group, propyl group, isopropyl group and butyl group, preferred examples include a methyl group, ethyl group and propyl group, and particularly preferred examples include a methyl group and ethyl group. A portion of, or all of, the hydrogen atoms within these monovalent hydrocarbon groups may be substituted with a halogen atom such as a fluorine atom, chlorine atom or bromine atom, and preferably with a fluorine atom.

Examples of the hydrolyzable group represented by X include a chlorine atom, alkoxy group, amino group and acyloxy group, and of these, an alkoxy group or amino group is preferred, and an alkoxy group is particularly desirable.

Examples of the silazane compound represented by the general formula (III) include hexamethyldisilazane and hexaethyldisilazane, and of these, hexamethyldisilazane is preferred. Examples of the monofunctional silane compound represented by the general formula (IV) include monosilanol compounds such as trimethylsilanol and triethylsilanol, monochlorosilanes such as trimethylchlorosilane and triethylchlorosilane, monoalkoxysilanes such as trimethylmethoxysilane and trimethylethoxysilane, monoaminosilanes such as trimethylsilyldimethylamine and trimethylsilyldiethylamine, and monoacyloxysilanes such as trimethylacetoxysilane. Of these, trimethylsilanol, trimethylmethoxysilane and trimethylsilyldiethylamine are preferred, and trimethylsilanol and trimethylmethoxysilane are particularly desirable.

The quantity used of these compounds is typically within a range from 0.1 to 0.5 mols, preferably from 0.2 to 0.4 mols, and even more preferably from 0.25 to 0.35 mols, per 1 mol of Si atoms within the hydrophilic spherical silica microparticles used. If this quantity is less than 0.1 mols, then the desired increases in the charge quantity and the dispersibility are not realized, whereas if the quantity exceeds 0.5 mols, the process becomes economically unviable.

The above hydrophobic spherical silica microparticles can be converted to a powder form using normal methods such as drying under normal pressure or drying under reduced pressure.

### <Production Method B>

Next is a detailed description of another method of producing the hydrophobic spherical silica microparticles of the present invention. According to this method, the hydrophobic spherical silica microparticles of the present invention are obtained via:
Step (B1): a step of synthesizing hydrophilic spherical silica microparticles,
Step (B2): a surface treatment step using a trifunctional silane compound,
Step (B3): a surface treatment step using a monofunctional silane compound,
Step (B4): a solvent conversion step, and
Step (B5): a surface treatment step using a monofunctional silane compound.

Each of these steps is described below in sequence.
- Step (B1): Step of Synthesizing Hydrophilic Spherical Silica Microparticles
   This step is the same as the step (A1) in the production method A, and yields a mixed solvent dispersion of hydrophilic spherical silica microparticles composed essentially of SiO₂ units.
- Step (B2): Surface Treatment Step using a Trifunctional Silane Compound
   This step (B2) is the same as the step (A2) in the production method A, and yields a first hydrophobic spherical silica microparticles mixed solvent dispersion.
   This step (B2) is necessary for inhibiting the aggregation of the silica microparticles in the subsequent solvent conversion of step (B4). If this step is omitted, then aggregation becomes more likely, and the particles within the produced silica powder are unable to retain their primary particle size, causing a deterioration in the flowability. Furthermore, this step (B2) is also essential in increasing the toner charge quantity and improving the toner dispersibility.
- Step (B3): Surface Treatment Step using a Monofunctional Silane Compound
   A silazane compound represented by the above general formula (III), a monofunctional silane compound represented by the above general formula (IV) or a mixture of the two is added to the first hydrophobic spherical silica microparticles mixed solvent dispersion obtained in the step (B2), thereby treating the surface of the first hydrophobic spherical silica microparticles, introducing R²₃SiO_{1/2} units (wherein, R² is as defined above for the general formula (III)) at the surface of the hydrophobic spherical silica microparticles, and yielding a second hydrophobic spherical silica microparticles mixed solvent dispersion.
   The treatment of this step causes residual silanol groups at the surface of the first hydrophobic spherical silica microparticles to undergo a triorganosilylation process, thereby introducing R²₃SiO_{1/2} units at the particle surface. As a result, the hydrophobicity of the hydrophobic spherical silica microparticles is further enhanced.
   If the step (B3) is omitted, then because the hydrophobicity of the obtained hydrophobic spherical silica microparticles is inadequate, maintaining dispersion of the microparticles in the solvent conversion step (B4) becomes difficult, and the microparticles become prone to coagulation, meaning a silica powder may be unattainable.
   The silazane compound represented by the general formula (III) and the monofunctional silane compound represented by the general formula (IV) used in this step are as described in relation to the step (A4) of the production method A.
   The quantity used of the above silazane compound and/or monofunctional silane compound (the surface treatment agent) is typically within a range from 0.2 to 0.6 mols, preferably from 0.3 to 0.5 mols, and even more preferably from 0.35 to 0.45 mols per 1 mol of Si atoms within the hydrophilic spherical silica microparticles used. If this quantity is less than 0.2 mols, then aggregation tends to occur in the following step, meaning the desired increases in the charge quantity and the dispersibility are not realized, whereas if the quantity exceeds 0.6 mols, the process becomes economically unviable.
   In this step (B3), the treatment is conducted with the concentration of the silica microparticles within the dispersion typically set within a range from 3 to 40% by mass, and preferably from 10 to 30% by mass. The concentration may be adjusted according to need.
- Step (B4): Solvent Conversion Step
   The dispersion medium of the second hydrophobic spherical silica microparticles mixed solvent dispersion obtained in the step (B3) is converted to a hydrocarbon-based solvent, thereby forming a second hydrophobic spherical silica microparticles hydrocarbon-based solvent dispersion.
   In the step (B4), it is essential that a hydrocarbon-based solvent is used as the solvent for the solvent conversion. If an organic solvent other than a hydrocarbon-based solvent is used, then the silica microparticles are prone to aggregation and/or coloration during the solvent conversion process, meaning the particles within the resulting silica powder may be unable to retain their primary particle size, causing a deterioration in the flowability, or may undergo coloration. For example, if the type of ketone-based solvent used in the surface treatment method disclosed in the patent reference 12 is used at this point, then when the mixed solvent is substituted with the ketone-based solvent, the microparticles are not able to disperse satisfactorily within the ketone-based solvent, causing coagulation and making it impossible to obtain the desired silica powder. This is because the second hydrophobic spherical silica microparticles have a small particle size, and therefore exhibit a particularly powerful cohesive force.
   In order to convert the dispersion medium of the second hydrophobic spherical silica microparticles mixed solvent dispersion from a mixed solvent containing a hydrophilic organic solvent and water to the hydrocarbon-based solvent, the hydrocarbon-based solvent may be added to the dispersion, and the mixed solvent then removed by evaporation (wherein this operation may be repeated if necessary).
   The quantity added of the hydrocarbon-based solvent, reported as a mass ratio relative to the mass of hydrophilic spherical silica microparticles used, is typically within a range from 0.5 to 5 times, preferably from 2 to 5 times, and even more preferably from 3 to 4 times the mass of the hydrophilic spherical silica microparticles.
   The concentration of the second hydrophobic spherical silica microparticles within the dispersion following solvent conversion is typically within a range from 10 to 70% by mass, and is preferably from 20 to 30% by mass. The dispersion is supplied to the subsequent step (B5) at this concentration level.
   There are no particular restrictions on the hydrocarbon-based solvent, provided it does not react with the silazane compound of the general formula (III) or the monofunctional silane compound of the general formula (IV) that functions as the surface treatment agent, and examples include saturated hydrocarbons and aromatic hydrocarbons, although aromatic hydrocarbons are preferred. Specific examples of aromatic hydrocarbons include compounds of 6 to 20 carbon atoms such as benzene, toluene and xylene, and toluene and xylene are preferred. By converting the dispersion medium in this manner to a hydrocarbon-based solvent that does not react with the surface treatment agent, the surface treatment of the subsequent step (B5) can be conducted more efficiently, yielding a high level of treatment.
- Step (B5) Surface Treatment Step using a Monofunctional Silane Compound
   A silazane compound represented by the above general formula (III), a monofunctional silane compound represented by the above general formula (IV) or a mixture of the two is added to the hydrocarbon-based solvent dispersion of the second hydrophobic spherical silica microparticles obtained in the step (B4), thereby further treating the surface of the second hydrophobic spherical silica microparticles, and introducing additional R²₃SiO_{1/2} units (wherein, R² is as defined above for the general formula (III)) at the surface of the hydrophobic spherical silica microparticles.

In this treatment, residual silanol groups at the surface of the second hydrophobic spherical silica microparticles undergo a triorganosilylation process, thereby introducing additional R²₃SiO_{1/2} units (wherein, R² is as defined above for the general formula (III)) at the particle surface.

The quantity used of the silazane compound, the monofunctional silane compound or a mixture of the two is typically within a range from 0.01 to 0.4 mols, preferably from 0.05 to 0.3 mols, and even more preferably from 0.1 to 0.2 mols per 1 mol of Si atoms within the hydrophilic spherical silica microparticles used. If this quantity is less than 0.01 mols, then the desired increases in the charge quantity and the dispersibility are not realized, whereas if the quantity exceeds 0.4 mols, the process becomes economically unviable.

In this manner, because the microparticles are reacted with the silazane compound of the general formula (III) and/or the monofunctional silane compound of the general formula (IV) that functions as the surface treatment agent after the dispersion medium has been converted to a hydrocarbon-based solvent that does not react with the surface treatment agent, the surface treatment can be conducted more efficiently, yielding a higher level of treatment.

The hydrophobic spherical silica microparticles obtained as the final product of the production method A or the production method B can be converted to a powder form by drying under normal pressure or drying under reduced pressure.

### <Toner External Additive formed from Hydrophobic Spherical Silica Microparticles>

The hydrophobic spherical silica microparticles of the present invention can be used as a toner external additive. The blend quantity of the toner external additive formed from the microparticles (hereafter also referred to as simply "the microparticles"), relative to the mass of the toner, is typically within a range from 0.01 to 20 parts by mass, preferably from 0.1 to 5 parts by mass, and even more preferably from 1 to 2 parts by mass, per 100 parts by mass of the toner. If this blend quantity is too small, then the quantity of the microparticles adhered to the toner is too small, meaning satisfactory levels of flowability and caking resistance cannot be imparted to the toner, whereas a blend quantity that is too large may have an adverse effect on the toner chargeability.

The state of the adhesion of the microparticles to the surface of the toner particles may involve mere mechanical adhesion, or may include weak bonding. Furthermore, the adhered microparticles may cover either the entire surface of the toner particles, or only a portion of the surface. Moreover, although a portion of the microparticles may form aggregates that cover the surface of the toner particles, the microparticles preferably cover the toner particles in the form of a single layer of microparticles.

Examples of toner particles that can be used with the microparticles of the present invention include conventional toner particles comprising a binder resin and a colorant as the main components, and if necessary, the toner may also include a charge control agent or the like.

A toner containing a toner external additive formed from the microparticles of the present invention can be used, for example, in electrophotographic and electrostatic recording methods, in an electrostatic image developing step used for developing an electrostatic image. This toner can used as either a one-component developer, or by mixing with a carrier, as a two-component developer. If used as a two-component developer, the toner external additive need not necessarily be added to the toner particles in advance, and the coating of the toner surface may be conducted by adding the external additive during the mixing of the toner and the carrier. Conventional carriers may be used as the carrier, including ferrite and iron powder, or carriers in which the surfaces of these materials have been coated with a resin coating.

Furthermore, the inventors of the present invention also discovered that, in addition to the properties described above, the toner external additive formed from hydrophobic spherical silica microparticles according to the present invention is able to impart the toner with chargeability properties that are independent of the environment.

### <Organic Resin Composition>

An organic resin composition of the present invention comprises (a) 100 parts by mass of an organic resin, and (b) from 0.01 to 20 parts by mass of the hydrophobic spherical silica microparticles of the present invention.

The organic resin used as the component (a) in this composition may be either a thermoplastic resin or a curable resin. Examples of thermoplastic resins include polyolefins such as polypropylene and polyethylene, polyesters such as polyethylene terephthalate and polybutylene terephthalate, and polyamides such as nylon 6 and nylon 66. Furthermore, examples of curable resin compositions include thermosetting resin compositions such as epoxy resin compositions and unsaturated polyester resin compositions, and ultraviolet-curable resin compositions such as epoxy acrylate resin compositions and urethane acrylate resin compositions.

The hydrophobic spherical silica microparticles used as the component (b) have undergone a high degree of hydrophobic treatment, and therefore although having a small particle size, are able to be readily dispersed within a variety of organic solvents and organic resins. These effects are obtained because the hydrophobic spherical silica microparticles have a particle surface that is almost entirely free of the silanol groups that have an adverse effect on the slip and blocking resistance properties of the resin surface.

In those cases where an aforementioned resin film is formed, the slip, blocking resistance and transparency of the resin film surface are favorable, and because the particle size of the microparticles of the component (b) is within a range from 0.005 to 0.09 µm, and preferably from 0.04 to 0.06 µm, the microparticles are unlikely to precipitate out of the uncured resin composition over time.

In this composition, the blend quantity of the microparticles of the component (b) is typically within a range from 0.01 to 10 parts by mass, and is preferably from 0.1 to 5 parts by mass, per 100 parts by mass of the organic resin. Determining the most suitable blend quantity within this range in accordance with the type of resin being used should be a simple matter for a person skilled in the art. In general, if the blend quantity is too small, then when a resin film is formed, the level of improvement in the slip and blocking resistance properties tends to be smaller, whereas if the blend quantity is too large, the transparency and strength of the resulting resin film tend to deteriorate.

In addition tn the above components (a) and (b), if required, the organic resin composition of the present invention may also contain other additives including stabilizers such as antioxidants and ultraviolet absorbers, processing aids, colorants, antistatic agents and lubricants, provided the inclusion of these additives does not impair the effects of the present invention.

Conventional methods may be used for mixing the hydrophobic spherical silica microparticles into the organic resin, and mixing devices that can be used include a Henschel mixer, V-type blender, ribbon blender, or stone mill. Furthermore, in those cases where the composition is of low viscosity, the prescribed quantities of the various components may be mixed uniformly using a kneader-mixer, butterfly mixer, or a typical mixer fitted with a propeller-type impeller. This mixing yields the composition of the present invention.

A conventional method may be used for forming a film from the composition, and examples include T-die methods, circular die methods, and biaxial stretching methods. Furthermore, if the composition is a low-viscosity liquid, then the film may be formed using a transfer method or coating method, and subsequently cured.

### EXAMPLES

A description of specifics of the present invention is provided below using a series of examples and comparative examples, although the present invention is in no way limited by the examples presented below.

### <Example 1>

### [Synthesis of Hydrophobic Spherical Silica Microparticles using Production Method A]

- Step (A1): Step of Synthesizing Hydrophilic Spherical Silica Microparticles
   A 3-liter glass reaction vessel fitted with a stirrer, a dropping funnel and a thermometer was charged with 989.5 g of methanol, 135.5 g of water and 66.5 g of 28% ammonia water, and the mixture was stirred thoroughly. The temperature of the resulting solution was adjusted to 35°C, and 436.5 g (2.87 mols) of tetramethoxysilane was then added dropwise to the solution, under constant stirring and over a period of 6 hours. Following completion of the dropwise addition, stirring was continued for a further 0.5 hours to complete the hydrolysis, thereby yielding a suspension of hydrophilic spherical silica microparticles.
- Step (A2): Surface Treatment Step using a Trifunctional Silane Compound
   With the suspension obtained above held at room temperature, 4.4 g (0.03 mols) of methyltrimethoxysilane was added dropwise over a period of 0.5 hours, and following completion of the dropwise addition, stirring was continued for a further 12 hours, thereby hydrophobically treating the surface of the silica microparticles and forming a hydrophobic spherical silica microparticles dispersion.
- Step (A3): Concentration Step
   Subsequently, an ester adapter and a cooling tube were fitted to the glass reaction vessel, the dispersion obtained in the previous step was heated to a temperature of 60 to 70°C, and 1,021 g of a mixture of methanol and water was removed by evaporation, yielding a hydrophobic spherical silica microparticles mixed solvent concentrated dispersion. At this point, the concentration of the hydrophobic spherical silica microparticles within the concentrated dispersion was 28% by mass.
- Step (A4): Surface Treatment Step using a Monofunctional Silane Compound
   To the concentrated dispersion obtained in the previous step was added 138.4 g (0.86 mols) of hexamethyldisilazane at room temperature, and the resulting dispersion was then heated to a temperature of 50 to 60°C and reacted for 9 hours, thereby trimethylsilylating the silica microparticles within the dispersion. Subsequently, the solvent within the dispersion was removed by evaporation under reduced pressure (6,650 Pa) at 130°C, yielding 186 g of hydrophobic spherical silica microparticles.

The hydrophilic spherical silica microparticles obtained in the step (A1) were measured using a measurement method 1 described below. Furthermore, the hydrophobic spherical silica microparticles obtained after completing each of the above steps (A1) to (A4) were measured using the measurement methods 2 to 4 described below. The results are shown in Table 1.

### [Measurement Methods 1 to 4]

### 1. Measurement of the Particle Size of Hydrophilic Spherical Silica Microparticles obtained in the Step (A1)

The silica microparticles suspension was added to methanol in sufficient quantity to generate a silica microparticles concentration of 0.5% by mass, and the microparticles were then dispersed by a 10 minute treatment with ultrasound. The particle size distribution of the thus treated microparticles was measured using a dynamic light scattering method with a laser Doppler Nanotrac particle size distribution analyzer (Product name: UPA-EX150, manufactured by Nikkiso Co., Ltd.), and the volume-based median size was recorded as the particle size. The median size is calculated by expressing the particle size distribution as a cumulative distribution, and refers to the particle size at the point where the accumulated volume reaches 50%.

### 2. Measurement of the Particle Size of Hydrophobic Spherical Silica Microparticles obtained in the Step (A4)

The silica microparticles were added to methanol in a quantity sufficient to generate a concentration of 0.5% by mass, and the microparticles were then dispersed by a 10 minute treatment with ultrasound. The particle size distribution of the thus treated microparticles was measured using a dynamic light scattering method with a laser Doppler-type Nanotrac particle size distribution analyzer (Product name: UPA-EX150, manufactured by Nikkiso Co., Ltd.), and the volume-based median size was recorded as the particle size.

### 3. Measurement of Shape of Hydrophobic Spherical Silica Microparticles

The shape of the microparticles was confirmed by inspection using an electron microscope (product name: S-4700, manufactured by Hitachi, Ltd., magnification: 100,000x magnification). The description "spherical" includes not only perfect spheres, but also slightly misshapen spherical shapes. The shape of this type of misshapen particle was evaluated on the basis of the degree of circularity when the shape of the particle was projected onto a two dimensional space, and refers to particles with a degree of circularity within a range from 0.8 to 1. The degree of circularity is calculated from the formula (circumferential length of a circle with the same surface area as the particle) / (circumferential length of the particle).

### 4. Measurement of Basic Flowability Energy of Hydrophobic Spherical Silica Microparticles

The flowability was measured using a powder flowability analyzer FT-4 (manufactured by Sysmex Corporation). The measurement principles of this analyzer are described below. Namely, the powder is placed inside a vertically positioned cylindrical container, the powder is rotated using two impellers (blades) provided at the tip of a vertical axial rod, and the blades are then lowered by a predetermined distance (from a height H1 to a height H2) while the rotation is continued. By splitting the force applied to the blades by the powder into a torque component and a load component, and measuring these two components, the quantity of work (the energy) for each component associated with lowering the blades from H 1 to H2 can be determined, and the total energy of the two components is then determined. Smaller values for this measured total energy value indicate more favorable flowability for the powder, and the energy value can therefore be used as an indicator of the powder flowability. A stability test was conducted using this analyzer.

### -- Conditions:

Vessel: a glass circular cylindrical vessel with a capacity of 160 ml (internal diameter: 50 mm, length: 79 mm) was used.

Blades: Two blades are attached to the tip of a stainless steel axial rod inserted vertically down inside the circular cylindrical vessel, with the blades opposing each other horizontally. The blades have a diameter of 48 mm. The distance from H1 to H2 is 69 mm.

### -- Stability Test

A powder placed inside the measurement container described above is changed from a stationary state to a flowing state, and the powder flowability properties are observed. The rotational speed of the blade tips is set to 100 mm/second, and the total energy is measured 7 times consecutively. The 7th measurement of the total energy (which represents the most stable state and is therefore referred to as the basic flowability energy) is shown in Table 1. A smaller value indicates superior flowability.

### [Preparation of an External Additive-mixed Toner]

96 parts by mass of a polyester resin with a glass transition temperature Tg of 60°C and a softening point of 110°C, and 4 parts by mass of a colorant (product name: Carmine 6BC, manufactured by Sumitomo Color Co., Ltd.) were kneaded, crushed and then classified, yielding a toner with an average particle size of 7 µm. To 40 g of this toner was added 1 g of the hydrophobic spherical silica microparticles obtained in the above example, and the resulting mixture was then mixed in a sample mill, yielding an external additive-mixed toner. Using this toner, the toner flowability was measured in accordance with a measurement method 5 described below. The results are shown in Table 1.

### [Measurement Method 5]

### 5. Measurement of Toner Flowability

The toner flowability was measured using a powder flowability analyzer FT-4 (manufactured by Sysmex Corporation). A stability test and a compression test were conducted.

### -- Conditions

Vessel: in the stability test, a glass circular cylindrical vessel with a capacity of 120 ml (internal diameter: 50 mm, length: 60 mm) was used. In the compression test, a glass circular cylindrical vessel with a capacity of 25 ml (internal diameter: 25 mm, length: 52.5 mm) was used.

Blades: Two blades are attached to the tip of a stainless steel axial rod inserted vertically down inside the circular cylindrical vessel, with the blades opposing each other horizontally. The blades have a diameter of 48 mm in the case of the vessel with a capacity of 120 ml, and a diameter of 23.5 mm in the case of the vessel with a capacity of 25 ml.

The distance from H 1 to H2 is 50 mm in the case of the vessel with a capacity of 120 ml, and 47.5 mm in the case of the vessel with a capacity of 25 ml.

### -- Stability Test

As described above, a powder placed inside the measurement container is changed from a stationary state to a flowing state, and the powder flowability properties are observed. The rotational speed of the blade tips is set to 100 mm/second, and the total energy is measured 7 times consecutively. The 7th measurement of the total energy (which represents the most stable state and is therefore referred to as the basic flowability energy) is shown in Table 1. A smaller value indicates superior flowability

### -- Compression Test

In this test, the powder flowability properties are observed under compression. A piston is used to apply a load to the powder, and with the powder compressed under a load of 10 N, the total energy is measured with the rotational speed of the blade tips set to 100 mm/second. The results are shown in Table 1. A smaller value indicates superior flowability when the powder is subjected to compression. This property is an indicator of the caking resistance, and a smaller value indicates a higher level of caking resistance.

### [Preparation of a Developer]

A developer was prepared by mixing 5 parts by mass of the external additive-mixed toner and 95 parts by mass of a carrier obtained by coating ferrite core particles with an average particle size of 85 µm with a polymer composed of a polyblend of a perfluoroalkyl acrylate resin and an acrylic resin. Using this developer, the toner charge quantity and the toner adhesion to a photoreceptor were measured in accordance with measurement methods 6 and 7 described below. The results obtained are shown in Table 1.

### [Measurement Methods 6 and 7]

### 6. Measurement of Toner Charge Quantity

Samples of the developer were left to stand for one day under either high-temperature, high-humidity conditions (30°C, 90% RH) or low-temperature, low-humidity conditions (10°C, 15% RH), and friction charging was then conducted by mixing the toner for 30 seconds in a shaker. The charge quantity of each of the samples was measured under the same conditions using a blow-off powder charge measuring device (product name: TB-200, manufactured by Toshiba Chemical Co., Ltd.). The difference between the toner charge quantity values under the two sets of conditions was determined, and used to evaluate the toner environment dependency.

### 7. Measurement of Toner Adhesion to Photoreceptor

The developer described above was placed in a two-component improved developing apparatus equipped with an organic photoreceptor, and a 30,000 copy print test was conducted. Toner adhesion to the photoreceptor can be detected as white spots on a solid printed image. If the number of white spots was at least 10 /cm², the adhesion was evaluated as "high", 1 to 9 spots/cm² was evaluated as "low", and 0 spots/cm² was recorded as "none".

### <Example 2>

With the exceptions of altering the quantities of methanol, water and 28% ammonia water used in the step (A1) of the example 1 to 1,039.5 g of methanol, 96.6 g of water, and 55.4 g of 28% ammonia water, 159 g of hydrophobic spherical silica microparticles were obtained in the same manner as the example 1. These hydrophobic spherical silica microparticles were measured using the same methods as those described for the example 1. The results are shown in Table 1.

### <Example 3>

With the exceptions of altering the quantities of methanol, water and 28% ammonia water used in the step (A1) of the example 1 to 1,045.7 g of methanol, 112.6 g of water, and 33.2 g of 28% ammonia water, 188 g of hydrophobic spherical silica microparticles were obtained in the same manner as the example 1. These hydrophobic spherical silica microparticles were measured using the same methods as those described for the example 1. The results are shown in Table 1.

### <Example 4>

### [Synthesis of Hydrophobic Spherical Silica Microparticles using Production Method B]

- Step (B1): Step of Synthesizing Hydrophilic Spherical Silica Microparticles
   A 3-liter glass reaction vessel fitted with a stirrer, a dropping funnel and a thermometer was charged with 989.5 g of methanol, 135.5 g of water and 66.5 g of 28% ammonia water, and the mixture was stirred thoroughly. The temperature of the resulting solution was adjusted to 35°C, and 436.5 g (2.87 mols) of tetramethoxysilane was then added dropwise to the solution, under constant stirring and over a period of 6 hours. Following completion of the dropwise addition, stirring was continued for a further 0.5 hours to complete the hydrolysis, thereby yielding a suspension of hydrophilic spherical silica microparticles.
- Step (B2): Surface Treatment Step using a Trifunctional Silane Compound
   With the suspension obtained in the previous step held at room temperature, 4.4 g (0.03 mols) of methyltrimethoxysilane was added dropwise over a period of 0.5 hours, and following completion of the dropwise addition, stirring was continued for a further 12 hours, thereby hydrophobically treating the surface of the silica microparticles and forming a hydrophobic spherical silica microparticles dispersion.
- Step (B3): Surface Treatment Step using a Monofunctional Silane Compound
   To the dispersion obtained in the previous step was added 185.2 g (1.15 mols) of hexamethyldisilazane at room temperature, and the resulting dispersion was then heated to a temperature of 50 to 60°C and reacted for 7 hours, thereby trimethylsilylating the silica microparticles within the dispersion.
- Step (B4): Solvent Conversion Step
   Subsequently, an ester adapter and a cooling tube were fitted to the glass reaction vessel, the dispersion obtained in the previous step was heated to a temperature of 60 to 70°C, and 1,021 g of a mixture of methanol and water was removed by evaporation. Subsequently, 1,590 g of toluene was added, the dispersion was heated to a temperature of 60 to 110°C, and 727 g of a mixture of methanol, water and toluene was removed by evaporation, yielding a hydrophobic spherical silica microparticles toluene dispersion.
- Step (B5): Surface Treatment Step using a Monofunctional Silane Compound

To the dispersion obtained in the previous step was added 51.7 g (0.32 mols) of hexamethyldisilazane at room temperature, and the resulting dispersion was then heated to a temperature of 100 to 110°C and reacted for 2 hours, thereby subjecting the silica microparticles within the dispersion to an additional trimethylsilylation. Subsequently, the solvent within the dispersion was removed by evaporation under reduced pressure (6,650 Pa) at 130°C, yielding 162 g of hydrophobic spherical silica microparticles.

The thus obtained hydrophobic spherical silica microparticles were measured using the same measurement methods described for the example 1. The results are shown in Table 1.

### <Example 5>

With the exceptions of altering the quantities of methanol, water and 28% ammonia water used in the step (B1) of the example 4 to 1,039.5 g of methanol, 96.6 g of water, and 55.4 g of 28% ammonia water, 193 g of hydrophobic spherical silica microparticles were obtained in the same manner as the example 4. These hydrophobic spherical silica microparticles were measured using the same methods as those described for the example 1. The results are shown in Table 1.

### <Example 6>

With the exceptions of altering the quantities of methanol, water and 28% ammonia water used in the step (B1) of the example 4 to 1,045.7 g of methanol, 112.6 g of water, and 33.2 g of 28% ammonia water, 184 g of hydrophobic spherical silica microparticles were obtained in the same manner as the example 4. These hydrophobic spherical silica microparticles were measured using the same methods as those described for the example 1. The results are shown in Table 1.

### <Comparative Example 1>

A 3-liter glass reaction vessel fitted with a stirrer, a dropping funnel and a thermometer was charged with 623.7 g of methanol, 41.4 g of water and 49.8 g of 28% ammonia water, and the mixture was stirred thoroughly. The temperature of the resulting solution was adjusted to 35°C, and dropwise addition of 1,163.7 g of tetramethoxysilane and 418.1 g of 5.4% ammonia water were commenced simultaneously, with the former being added dropwise over a period of 6 hours and the latter added dropwise over a period of 4 hours. Following completion of the dropwise addition of the tetramethoxysilane, stirring was continued for a further 0.5 hours to complete the hydrolysis, thereby yielding a suspension of silica microparticles. Subsequently, an ester adapter and a cooling tube were fitted to the glass reaction vessel, the suspension was heated to a temperature of 60 to 70°C, and 1,132 g of methanol was removed by evaporation, 1,200 g of water was added, the mixture was heated to a temperature of 70 to 90°C, and a further 273 g of methanol was removed by evaporation, yielding a silica microparticles aqueous suspension.

11.6 g of methyltrimethoxysilane (equivalent to a molar ratio of 0.01 relative to the quantity of tetramethoxysilane) was then added dropwise to the thus obtained aqueous suspension, at room temperature and over a period of 0.5 hours, and following completion of the dropwise addition, stirring was continued for a further 12 hours to complete the surface treatment of the silica microparticles.

To the thus obtained dispersion was added 1,440 g of methyl isobutyl ketone, and the mixture was then heated to a temperature of 80 to 110°C, and a mixture of methanol and water was removed by evaporation over a period of 7 hours. 357.6 g of hexamethyldisilazane was added at room temperature to the resulting dispersion, and the mixture was then heated to a temperature of 120°C and reacted for 3 hours, thereby subjecting the silica microparticles to a trimethylsilylation. Subsequently, the solvent was removed by evaporation under reduced pressure, yielding 477 g of spherical hydrophobic silica microparticles.

The silica microparticles obtained in this manner were tested using the same measurement methods as those described for the example 1. The results are shown in Table 2.

### <Comparative Example 2>

A 3-liter glass reaction vessel fitted with a stirrer, a dropping funnel and a thermometer was charged with 623.7 g of methanol, 41.4 g of water and 49.8 g of 28% ammonia water, and the mixture was stirred thoroughly. The temperature of the resulting solution was adjusted to 35°C, and dropwise addition of 1,163.7 g of tetramethoxysilane and 418.1 g of 5.4% ammonia water were commenced simultaneously, with the former being added dropwise over a period of 6 hours and the latter added dropwise over a period of 4 hours. Following completion of the dropwise addition of the tetramethoxysilane, stirring was continued for a further 0.5 hours to complete the hydrolysis, thereby yielding a suspension of silica microparticles.

11.6 g of methyltrimethoxysilane (equivalent to a molar ratio of 0.01 relative to the quantity of tetramethoxysilane) was then added dropwise to the thus obtained suspension, at room temperature and over a period of 0.5 hours, and following completion of the dropwise addition, stirring was continued for a further 12 hours to complete the surface treatment of the silica microparticles.

Subsequently, an ester adapter and a cooling tube were fitted to the glass reaction vessel, 1,440 g of methyl isobutyl ketone was added to the dispersion containing the above surface-treated silica microparticles, and the mixture was then heated to a temperature of 80 to 110°C, and a mixture of methanol and water was removed by evaporation over a period of 7 hours.

357.6 g of hexamethyldisilazane was added at room temperature to the resulting dispersion, and the mixture was then heated to a temperature of 120°C and reacted for 3 hours, thereby subjecting the silica microparticles to a trimethylsilylation. Subsequently, the solvent was removed by evaporation under reduced pressure, yielding 472 g of spherical hydrophobic silica microparticles.

The silica microparticles obtained in this manner were tested using the same measurement methods as those described for the example 1. The results are shown in Table 2.

### <Comparative Example 3>

With the exception of altering the tetramethoxysilane hydrolysis temperature used during synthesis of the silica microparticles from 35°C to 45°C, each of the production steps was conducted in the same manner as the comparative example 1, but the silica microparticles coagulated during the solvent conversion to methyl isobutyl ketone.

### <Comparative Example 4>

With the exception of omitting the step (A2) from the example 1, 183 g of spherical hydrophobic silica microparticles were obtained in the same manner as the example 1. The silica microparticles obtained in this manner were tested using the same measurement methods as those described for the example 1. The results are shown in Table 2.

### <Comparative Example 5>

With the exception of omitting the step (A3) from the example 1, 176 g of spherical hydrophobic silica microparticles were obtained in the same manner as the example 1. The silica microparticles obtained in this manner were tested using the same measurement methods as those described for the example 1. The results are shown in Table 2.

### <Comparative Example 6>

With the exception of omitting the step (B2) from the example 4, 183 g of spherical hydrophobic silica microparticles were obtained in the same manner as the example 4. The silica microparticles obtained in this manner were tested using the same measurement methods as those described for the example 1. The results are shown in Table 3.

### <Comparative Example 7>

With the exception of omitting the step (B3) from the example 4, each of the production steps was conducted in the same manner as the example 4, but the silica microparticles coagulated during the solvent conversion of the step (B4).

### <Comparative Example 8>

With the exception of replacing the toluene used in the step (B4) of the example 4 with methyl isobutyl ketone, 204 g of spherical hydrophobic silica microparticles were obtained in the same manner as the example 4. The silica microparticles were colored yellow. The silica microparticles obtained in this manner were tested using the same measurement methods as those described for the example 1. The results are shown in Table 3.

### <Comparative Example 9>

A 0.3-liter glass reaction vessel fitted with a stirrer and a thermometer was charged with 100 g of deflagration method silica (product name: SO-C1, manufactured by Admatechs Co., Ltd.), 1 g of pure water was added under constant stirring, and following sealing of the vessel, stirring was continued for a further 10 hours at 60°C. Subsequently, the mixture was cooled to room temperature, 2 g of hexamethyldisilazane was added under stirring, and following sealing of the vessel, stirring was continued for a further 24 hours. The temperature was then raised to 120°C, and nitrogen gas was blown though the vessel while the residual raw materials and the generated ammonia were removed, thus forming 100 g of hydrophobic spherical silica microparticles.

The silica microparticles obtained in this manner were tested using the same measurement methods as those described for the example 1. The results are shown in Table 3.

### <Comparative Example 10>

Using a hydrophobic silica produced by hydrophobic treatment of a fumed silica (product name: Aerosil R972, manufactured by Nippon Aerosil Co., Ltd., a dimethyldichlorosilane-treated product containing primary particles aggregates) instead of the hydrophobic spherical silica microparticles of the example 1, testing was conducted in the same manner as the example 1. The results are shown in Table 3.

### <Comparative Example 11>

Using a hydrophobic silica produced by hydrophobic surface treatment of a precipitated silica (product name: Nipsil SS50F, manufactured by Nippon Silica Industry Co., Ltd., primary particles aggregates) instead of the hydrophobic spherical silica microparticles of the example 1, testing was conducted in the same manner as the example 1. The results are shown in Table 3.

### <Comparative Example 12>

A 0.3-liter glass reaction vessel fitted with a stirrer and a thermometer was charged with 100 g of deflagration method silica (product name: SO-C1, manufactured by Admatechs Co., Ltd.), 1 g of pure water was added under constant stirring, and following sealing of the vessel, stirring was continued for a further 10 hours at 60°C. Subsequently, the mixture was cooled to room temperature, 1 g of methyltrimethoxysilane was added under stirring, and following sealing of the vessel, stirring was continued for a further 24 hours. Subsequently, 2 g of hexamethyldisilazane was added under stirring, and following sealing of the vessel, stirring was continued for a further 24 hours. The temperature was then raised to 120°C, and nitrogen gas was blown though the vessel while the residual raw materials and the generated ammonia were removed, thus forming 101 g of hydrophobic spherical silica microparticles.

The silica microparticles obtained in this manner were tested using the same measurement methods as those described for the example 1. The results are shown in Table 3.

### <Example 7>

0.3 parts by mass of the hydrophobic spherical silica microparticles obtained in the example 1 were blended uniformly into 100 parts by mass of a T-die molding polypropylene resin Noblen FL-200 (melt flow rate: 8 g/10 min., manufactured by Mitsui Toatsu Chemicals Inc.). The resulting mixture was extruded at 250°C from a uniaxial extruder of diameter 25 mm, and then pelletized using a pelletizer. The resulting pellets were then subjected to additional T-die molding at 250°C using a uniaxial extruder of diameter 20 mm, thus forming a film with a thickness of 0.5 mm. The properties of the thus obtained film were evaluated in the manner described below.

### [Transparency]

10 layers of the film were superimposed, and the total light transmittance was measured.

### [Blocking Resistance]

Two layers of the film were superimposed horizontally, the two layers of film were sandwiched between two sheets of glass, a load of 100 g/cm² was placed on top of the upper sheet of glass, and the resulting structure was left to stand for 24 hours at room temperature. Subsequently, the upper glass sheet as removed, and with the two layers of film still superimposed, samples were prepared by cutting the films into squares with dimensions of 5 cm x 5 cm. For each sample, the superimposed edges of the two films were pulled in opposite directions, and the force (g) required to peel the films apart was measured and used as an indicator of the blocking resistance. Smaller values for the force required to achieve peeling indicate more favorable blocking resistance.

### [Slip Properties]

The coefficient of dynamic friction between the film and an SBR rubber surface was measured in accordance with ASTM D-1894. The results are shown in Table 4.

### <Examples 8 to 12>

With the exceptions of altering the silica microparticles and the blend quantity thereof as shown in Table 4, films were produced and evaluated in the same manner as the example 7. The results are shown in Table 4.

### <Comparative Examples 13 to 22>

With the exceptions of altering the silica microparticles and the blend quantity thereof as shown in Tables 5 and 6, films were produced and evaluated in the same manner as the example 7. The results are shown in Tables 5 and 6.

**[Table 1]**

| | Example 1 | Example 2 | Example 3 | Example 4 | Example 5 | Example 6 |
|---|---|---|---|---|---|---|
| Particle size ⁽¹⁾ (nm) | 52 | 42 | 11 | 53 | 42 | 12 |
| Particle size ⁽²⁾ (nm) | 52 | 42 | 11 | 53 | 42 | 12 |
| Shape | Spherical | Spherical | Spherical | Spherical | Spherical | Spherical |
| Basic flowability energy of hydrophobic spherical silica microparticles (mJ) | 362 | 376 | 384 | 348 | 381 | 383 |
| Basic flowability energy of toner (mJ) | 85.3 | 87.2 | 89.7 | 85.3 | 89.4 | 90.4 |
| Toner compression test ⁽³⁾ (mJ) | 290 | 480 | 473 | 272 | 431 | 492 |
| High-temperature high-humidity toner charge quantity (µC/g) | -49 | -49 | -52 | -55 | -54 | -57 |
| Low-temperature low-humidity toner charge quantity (µC/g) | -52 | -51 | -56 | -57 | -56 | -60 |
| Toner adhesion | None | None | None | None | None | None |

| | | | | | | |
|---|---|---|---|---|---|---|
| <Notes> (1): the hydrophilic spherical silica microparticles of the dispersion obtained in either the step (A1) or the step (B1) (2): the final hydrophobic spherical silica microparticles (3) Pressure applied: 10 N | | | | | | |

**[Table 2]**

| | Comparative example 1 | Comparative example 2 | Comparative example 3 | Comparative example 4 | Comparative example 5 |
|---|---|---|---|---|---|
| Particle size ⁽¹⁾ (nm) | 115 | 115 | 83 | 55 | 54 |
| Particle size ⁽²⁾ (nm) | 115 | 228 | Coagulated during the solvent conversion step | 67 | 66 |
| Shape | Spherical | Spherical | - | Spherical | Spherical |
| Basic flowability energy of hydrophobic spherical silica microparticles (mJ) | 2640 | 3230 | - | 584 | 621 |
| Basic flowability energy of toner (mJ) | 92.2 | 94.4 | - | 98.7 | 99.7 |
| Toner compression test ⁽³⁾ (mJ) | 677 | 689 | - | 371 | 413 |
| High-temperature high-humidity toner charge quantity (µC/g) | -38 | -39 | - | -40 | -32 |
| Low-temperature low-humidity toner charge quantity (µC/g) | -41 | -43 | - | -46 | -39 |
| Toner adhesion | None | None | - | Low | High |

| | | | | | |
|---|---|---|---|---|---|
| <Notes> (1): the hydrophilic spherical silica microparticles of the dispersion obtained in either the step (A1) or the step (B1) (2): the final hydrophobic spherical silica microparticles (3) Pressure applied: 10 N | | | | | |

**[Table 3]**

| | Comparative example 6 | Comparative example 7 | Comparative example 8 | Comparative example 9 | Comparative example 10 | Comparative example 11 | Comparative example 12 |
|---|---|---|---|---|---|---|---|
| Particle size ⁽¹⁾ (nm) | 52 | 53 | 52 | - | - | - | - |
| Particle size ⁽²⁾ (nm) | 64 | Coagulated during the solvent conversion step | 72 | 300 | 300 | 1400 | 300 |
| Shape | Spherical | - | Spherical | Spherical | Amorphous | Amorphous | Spherical |
| Basic flowability energy of hydrophobic spherical silica microparticles (mJ) | 552 | - | 753 | 564 | 45 | 108 | 578 |
| Basic flowability energy of toner (mJ) | 96.8 | - | 98.4 | 96.7 | 94.6 | 89.5 | 96.3 |
| Toner compression test ⁽³⁾ (mJ) | 353 | - | 408 | 684 | 680 | 676 | 672 |
| High-temperature high-humidity toner charge quantity (µC/g) | -42 | - | -39 | -35 | -34 | -24 | -36 |
| Low-temperature low-humidity toner charge quantity (µC/g) | -49 | - | -44 | -51 | -58 | -33 | -50 |
| Toner adhesion | Low | - | Low | High | High | High | High |

| | | | | | | | |
|---|---|---|---|---|---|---|---|
| <Notes> (1): the hydrophilic spherical silica microparticles of the dispersion obtained in either the step (A1) or the step (B1) (2): the final hydrophobic spherical silica microparticles (3) Pressure applied: 10 N | | | | | | | |

**[Table 4]**

| | Example 7 | Example 8 | Example 9 | Example 10 | Example 11 | Example 12 |
|---|---|---|---|---|---|---|
| Silica microparticles | Prepared in the example 1 | Prepared in the example 2 | Prepared in the example 3 | Prepared in the example 4 | Prepared in the example 5 | Prepared in the example 6 |
| Blend quantity (parts by mass) | 0.3 | 0.3 | 0.3 | 0.3 | 0.3 | 0.3 |
| Slip | 0.11 | 0.11 | 0.14 | 0.09 | 0.10 | 0.10 |
| Blocking resistance (g) | 1.3 | 1.2 | 1.4 | 0.9 | 1.0 | 1.1 |
| Transparency | 88 | 90 | 91 | 90 | 90 | 91 |

**[Table 5]**

| | Comparative example 13 | Comparative example 14 | Comparative example 15 | Comparative example 16 | Comparative example 17 | Comparative example 18 |
|---|---|---|---|---|---|---|
| Silica microparticles | Prepared in the comparative example 1 | Prepared in the comparative example 2 | Prepared in the comparative example 4 | Prepared in the comparative example 5 | Prepared in the comparative example 6 | Prepared in the comparative example 8 |
| Blend quantity (parts by mass) | 0.1 | 0.3 | 0.3 | 0.3 | 0.3 | 0.3 |
| Slip | 0.23 | 0.19 | 0.18 | 0.20 | 0.21 | 0.20 |
| Blocking resistance (g) | 2.0 | 1.6 | 1.6 | 1.9 | 1.8 | 1.9 |
| Transparency | 91 | 84 | 85 | 82 | 85 | 86 |

**[Table 6]**

| | Comparative example 19 | Comparative example 20 | Comparative example 21 | Comparative example 22 |
|---|---|---|---|---|
| Silica microparticles | Prepared in the comparative example 9 | Prepared in the comparative example 10 | Prepared in the comparative example 11 | - |
| Blend quantity (parts by mass) | 0.3 | 0.3 | 0.3 | 0 |
| Slip | 0.33 | 0.31 | 0.34 | 0.41 |
| Blocking resistance (g) | 2.8 | 3.1 | 3.0 | 8.2 |
| Transparency | 77 | 81 | 79 | 92 |

### [Industrial Applicability]

The hydrophobic spherical silica microparticles of the present invention are useful as a toner external additive.

The hydrophobic spherical silica microparticles of the present invention can also be used favorably for improving the properties (such as the slip properties, abrasion resistance, lubricity, blocking prevention and flexibility) of various rubbers and synthetic resins, improving the properties of coating materials and ink coating agents, imparting lubricity or water repellency to cosmetic products, and improving the flowability of all manner of powders such as the abrasive particles of an abrasive or powdered resins.

The organic resin composition of the present invention is useful in forming a resin film with favorable transparency, and excellent blocking resistance, slip, and scratch resistance properties.

## Claims

1. Hydrophobic spherical silica microparticles,
obtained by subjecting a surface of hydrophilic spherical silica microparticles, composed essentially of SiO₂ units and obtained by subjecting a tetrafunctional silane compound, a partial hydrolysis-condensation product thereof or a combination of the two to hydrolysis and condensation, to a hydrophobic treatment comprising a step of introducing R¹SiO_{3/2} units (wherein, R¹ represents a substituted or unsubstituted monovalent hydrocarbon group of 1 to 20 carbon atoms) and then a step of introducing R²₃SiO_{1/2} units (wherein, R² represents identical or different, substituted or unsubstituted monovalent hydrocarbon groups of 1 to 6 carbon atoms), and having
a basic flowability energy of not more than 500 mJ, and
a particle size within a range from 0.005 to 0.09 µm.

2. A method of producing the hydrophobic spherical silica microparticles defined in claim 1, the method comprising:
(A1) subjecting a tetrafunctional silane compound represented by a general formula (I):
Si(OR³)₄ (I)
(wherein, R³ represents identical or different monovalent hydrocarbon groups of 1 to 6 carbon atoms), a partial hydrolysis-condensation product thereof or a combination of the two to hydrolysis and condensation, in presence of a basic substance and within a mixed liquid of a hydrophilic organic solvent and water, thereby yielding a mixed solvent dispersion of hydrophilic spherical silica microparticles composed essentially of SiO₂ units,
(A2) adding a trifunctional silane compound represented by a general formula (II) shown below:
R¹Si(OR⁴)₃ (II)
(wherein, R¹ represents a substituted or unsubstituted monovalent hydrocarbon group of 1 to 20 carbon atoms, and R⁴ represents identical or different monovalent hydrocarbon groups of 1 to 6 carbon atoms), a partial hydrolysis-condensation product thereof or a combination of the two to the mixed solvent dispersion of hydrophilic spherical silica microparticles, thereby treating a surface of the hydrophilic spherical silica microparticles, introducing R¹SiO_{3/2} units (wherein, R¹ is as defined above) at the surface of the hydrophilic spherical silica microparticles, and yielding a first hydrophobic spherical silica microparticles mixed solvent dispersion,
(A3) removing a portion of the hydrophilic organic solvent and water from the first hydrophobic spherical silica microparticles mixed solvent dispersion, thereby concentrating the dispersion and forming a first hydrophobic spherical silica microparticles mixed solvent concentrated dispersion, and
(A4) adding a silazane compound represented by a general formula (III) shown below:
R²₃SiNHSiR²₃ (III)
(wherein, R² represents identical or different, substituted or unsubstituted monovalent hydrocarbon groups of 1 to 6 carbon atoms), a monofunctional silane compound represented by a general formula (IV) shown below:
R²₃SiX (IV)
(wherein, R² is as defined above for the general formula (III), and X represents an OH group or a hydrolyzable group) or a combination of the two to the first hydrophobic spherical silica microparticles mixed solvent concentrated dispersion, thereby treating a surface of the first hydrophobic spherical silica microparticles, introducing R²₃SiO_{1/2} units (wherein, R² is as defined above for the general formula (III)) at the surface of the first hydrophobic spherical silica microparticles, and yielding second hydrophobic spherical silica microparticles.

3. A method of producing the hydrophobic spherical silica microparticles defined in claim 1, the method comprising:
(B 1) subjecting a tetrafunctional silane compound represented by a general formula (I):
Si(OR³)₄ (I)
(wherein, R³ represents identical or different monovalent hydrocarbon groups of 1 to 6 carbon atoms), a partial hydrolysis-condensation product thereof or a combination of the two to hydrolysis and condensation within a mixed liquid of a hydrophilic organic solvent and water that contains a basic substance, thereby yielding a mixed solvent dispersion of hydrophilic spherical silica microparticles composed essentially of SiO₂ units,
(B2) adding a trifunctional silane compound represented by a general formula (II) shown below:
R¹Si(OR⁴)₃ (II)
(wherein, R¹ represents a substituted or unsubstituted monovalent hydrocarbon group of 1 to 20 carbon atoms, and R⁴ represents identical or different monovalent hydrocarbon groups of 1 to 6 carbon atoms), a partial hydrolysis-condensation product thereof or a combination of the two to the mixed solvent dispersion of hydrophilic spherical silica microparticles, thereby treating a surface of the hydrophilic spherical silica microparticles, introducing R¹SiO_{3/2} units (wherein, R¹ is as defined above) at the surface of the hydrophilic spherical silica microparticles, and yielding a first hydrophobic spherical silica microparticles mixed solvent dispersion,
(B3) adding a silazane compound represented by a general formula (III) shown below:
R²₃SiNHSiR²₃ (III)
(wherein, R² represents identical or different, substituted or unsubstituted monovalent hydrocarbon groups of 1 to 6 carbon atoms), a monofunctional silane compound represented by a general formula (IV) shown below:
R²₃SiX (IV)
(wherein, R² is as defined above for the general formula (III), and X represents an OH group or a hydrolyzable group) or a combination of the two to the first hydrophobic spherical silica microparticles mixed solvent dispersion, thereby treating a surface of the first hydrophobic spherical silica microparticles, introducing R²₃SiO_{1/2} units (wherein, R² is as defined above for the general formula (III)) at the surface of the hydrophobic spherical silica microparticles, and yielding a second hydrophobic spherical silica microparticles mixed solvent dispersion,
(B4) converting the dispersion medium of the second hydrophobic spherical silica microparticles mixed solvent dispersion to a hydrocarbon-based solvent, thereby forming a second hydrophobic spherical silica microparticles hydrocarbon-based solvent dispersion, and
(B5) adding a silazane compound represented by the general formula (III), a monofunctional silane compound represented by the general formula (IV) or a combination of the two to the second hydrophobic spherical silica microparticles hydrocarbon-based solvent dispersion, thereby further treating a surface of the second hydrophobic spherical silica microparticles, introducing additional R²₃SiO_{1/2} units (wherein, R² is as defined above for the general formula (III)) at the surface of the hydrophobic spherical silica microparticles, and yielding third hydrophobic spherical silica microparticles.

4. A method of producing hydrophobic spherical silica microparticles according to claim 3, wherein the hydrocarbon-based solvent is an aromatic hydrocarbon-based solvent.

5. An electrostatic image developing toner external additive, formed from the hydrophobic spherical silica microparticles defined in claim 1.

6. An organic resin composition, comprising:
(a) 100 parts by mass of an organic resin, and
(b) 0.01 to 20 parts by mass of the hydrophobic spherical silica microparticles defined in claim 1.

7. The composition according to claim 6, wherein the organic resin is a thermoplastic resin.

8. The composition according to claim 7, wherein thermoplastic resin is a polyolefin, a polyester, or a polyamide.

9. The composition according to claim 7, wherein thermoplastic resin is polypropylene, polyethylene, polyethylene terephthalate, polybutylene terephthalate, nylon 6 or nylon 66.

10. The composition according to claim 6, wherein the organic resin is a curable resin.

11. The composition according to claim 10, wherein the curable resin is a thermosetting resin composition or ultraviolet-curable resin composition.

12. The composition according to claim 10, wherein the curable resin is an epoxy resin composition, unsaturated polyester resin composition, epoxy acrylate resin composition, or urethane acrylate resin composition.
